# EUROPEAN PATENT SPECIFICATION

(11) **EP 4 271 001 B1**
(45) Date of publication and mention of the grant of the patent: **14.05.2025**
(21) Application number: 21927812.4
(22) Date of filing: 25.02.2021
(51) Int. Cl.: H04W 4/24, H04W 4/44, H04W 4/46, H04W 88/04, H04M 15/00, H04W 28/02, H04W 40/22

(54) **COMMUNICATION DEVICE, COMMUNICATION METHOD, AND PROGRAM**
KOMMUNIKATIONSVORRICHTUNG, KOMMUNIKATIONSVERFAHREN UND PROGRAMM
DISPOSITIF DE COMMUNICATION, PROCÉDÉ DE COMMUNICATION, ET PROGRAMME

(43) Date of publication of application: 01.11.2023
(73) Proprietor: HONDA MOTOR CO., LTD., Minato-ku Tokyo 107-8556 (JP)
(72) Inventor: OTAKA, Masaru, Tokyo 107-8556 (JP)
(74) Representative: Weickmann & Weickmann PartmbB
(86) International application number: PCT/JP2021/006978
(87) International publication number: WO 2022/180710

(56) References cited:
- EP-A1- 3 554 137
- WO-A1-2018/056386
- WO-A1-2021/001086
- JP-A- 2014 534 681
- JP-A- 2018 528 684
- US-A1- 2013 089 033

## Description

### TECHNICAL FIELD

The present invention relates to a communication device, a communication method, and a program, and more particularly, to a relay transmission technique.

### BACKGROUND ART

Vehicle-to-Everything (V2X) communication, by which a vehicle communicates wirelessly with another vehicle or an object, enables the vehicle to acquire various types of information or to provide information to others. When a vehicle transmits data to a device such as a server on the Internet or a network that has been constructed by a service provider, the vehicle has to connect to a predetermined communication device such as, for example, a base station or an access point through which the vehicle is capable of connecting to the network. However, vehicles are not always in an environment where the connection to such a predetermined communication device is enabled. For this reason, it is supposed that a vehicle communicates with a predetermined communication device through, for example, another vehicle capable of connecting to such a predetermined communication device. Japanese Patent Laid-Open No. 2017-184051 describes a configuration for connecting between vehicles to transfer data to a predetermined node. In Japanese Patent Laid-Open No. 2017-184051, a vehicle close to the predetermined node is identified by communication between the vehicles, and data is transferred to the vehicle close to the predetermined node.

Additionally, EP 3 554 137 A1 discloses a terminal apparatus including a processing unit configured to determine which of a base station or a relay terminal is set as a transmission destination for each packet in accordance with whether or not a predetermined condition is satisfied. Further, it is referred to WO 2021/001086 A1.

### SUMMARY OF INVENTION

### TECHNICAL PROBLEM

In a case where a vehicle relays communication of another vehicle by using, for example, a paid communication service, the vehicle may bear a communication cost of the communication that has been performed by the vehicle for relaying the communication of another vehicle. Hence, there is a demand for a technique for determining whether the communication to be relayed by the vehicle is communication related to the vehicle itself or relay communication of another vehicle.

The present invention provides a technique capable of easily determining whether data transmitted and received by a communication device is data of relay communication.

### SOLUTION TO PROBLEM

A communication device according to one aspect of the present invention is a communication device according to claim 1.

### ADVANTAGEOUS EFFECTS OF INVENTION

According to the present invention, it becomes possible to easily determine whether the data transmitted and received by the communication device is data of the relay communication.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a system configuration example.
FIG. 2 is a diagram illustrating a hardware configuration example of a communication device.
FIG. 3 is a diagram illustrating a functional configuration example of the communication device.
FIG. 4 is a diagram illustrating an example of a flow of processing performed in the system.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (System Configuration)

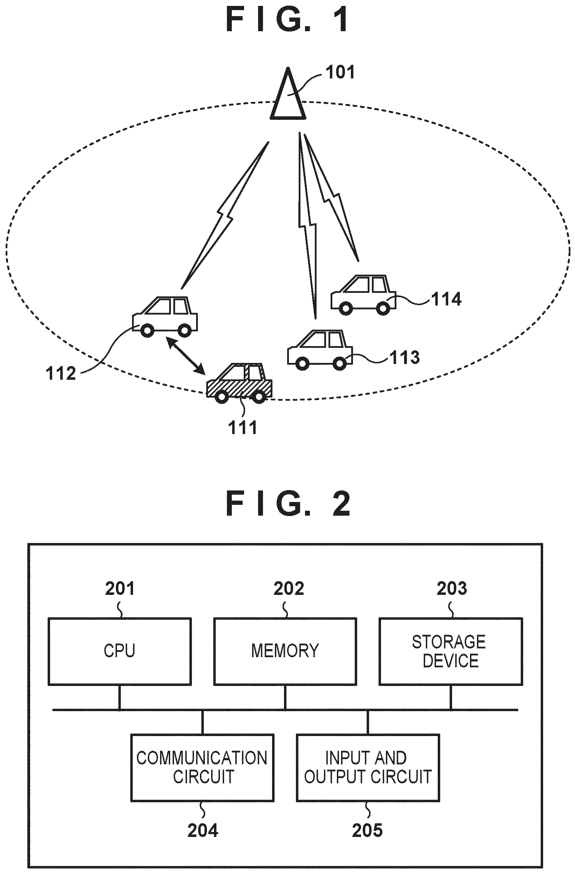

FIG. 1 illustrates a configuration example of a system in the present embodiment. The present system is a wireless communication system in which vehicles 111 to 114, which are capable of performing wireless communication, connect to a predetermined network such as the Internet, and perform communication. The vehicles 111 to 114 according to the present embodiment connect to a base station 101 of a cellular communication system, for example, and perform communication with a predetermined communication device. In addition, the vehicles 111 to 114 are, for example, configured to be capable of communicating with each other by connecting to each other in a communication method different from the cellular communication method for communicating with the base station 101. Here, the communication method different from the cellular communication method is, for example, any communication method of cellular Vehicle-to-Everything (V2X), wireless LAN, Dedicated Short Range Communications (DSRC), and Bluetooth (registered trademark). Note that although the cellular V2X is one aspect of the cellular communication method, it is not used for the communication between the base station and the terminal (that is, the vehicle 111 to the vehicle 114), but is used for the communication between a device other than the base station and the terminal (the vehicle 111 to the vehicle 114). Therefore, these communication methods are treated as different communication methods throughout the present embodiment and the scope of claims. Note that a combination of the cellular communication method and any other communication method is an example, and the vehicles 111 to 114 are configured to connect to a first device such as the base station 101 in a first communication method, and to be connectable with each other in a second communication method different from the first communication method. Note that in FIG. 1, only one base station 101 and four vehicles 111 to 114 are illustrated, but it is needless to say that a large number of these devices can be present.

By performing cellular communication with the base station 101, the vehicles 111 to 114 are capable of transmitting, for example, information that has been acquired by sensors of the respective vehicles to a device such as a predetermined information processing server. The information processing server is capable of performing various types of processing such as control for automated driving with this information. In addition, by performing the cellular communication with the base station 101, the vehicles 111 to 114 are capable of acquiring various types of information such as driving control information and service information in accordance with the locations of the vehicles from a server that holds, for example, predetermined information. On the other hand, for example, in a case where the vehicle 111 is present at a cell end, the vehicle 111 is not capable of performing large-capacity communication due to a large propagation loss between the base station 101 and the vehicle 111, and in some cases, the vehicle 111 may not be capable of performing communication with the base station 101 at all. For this reason, for example, any one of the vehicle 112 to the vehicle 114 relays communication of the vehicle 111, so that the vehicle 111 can perform communication with the base station 101. Note that in the following, it is assumed that the vehicle 112 relays the communication between the vehicle 111 and the base station 101.

In the cellular communication system, a meter rate charging system is applied, in some cases. In this situation, when the vehicle 112 relays the communication of the vehicle 111, the cellular communication system including the base station 101 regards the communication of the vehicle 111 as the communication of the vehicle 112, and may charge the vehicle 112 the cost (fee) of the communication. For this reason, there is a demand for a mechanism capable of determining whether the communication (user data) between the vehicle 112 and the base station 101 is the communication of the vehicle 112 itself or the communication of the vehicle 111. On the other hand, the communication between the vehicle 111 and the vehicle 112 can be performed in a communication method different from the communication between the vehicle 112 and the base station 101. Hence, the base station 101 cannot identify the vehicle 111, in some cases.

Accordingly, in the present embodiment, the vehicle 112 sets identification information regarding quality of service in the communication of the user data of the vehicle 111 to a value that is not used as the identification information of quality of service in the communication of the user data between the vehicle 111 and the base station 101. Then, the vehicle 112 associates a set value of the identification information regarding the quality of service with the user data, and performs communication between the vehicle 111 and the base station 101. For example, with regard to the user data that has been received from the vehicle 111, the vehicle 112 generates a signal obtained by associating the user data with the identification information of the quality of service, and transmits the signal to the base station 101. In addition, with regard to user data that has been received from the base station 101, identification information of the quality of service is confirmed, and the user data having the identification information of the quality of service that is associated with the vehicle 111 is transferred to the vehicle 111.

Here, the identification information of the quality of service may be, for example, quality of service (QoS) class identifier (QCI) in long term evolution (LTE) or 5G QoS identifier (5QI) in a fifth generation (5G) communication system. That is, in the present embodiment, a value that is not included in ranges of a QCI value or a 5QI value is used for the communication of the user data between a conventional base station and a terminal, that is, a value the meaning or priority of which is not defined in the QCI value or the 5QI value in the conventional communication is used as a value for the relay transmission. For example, in a case where 1 to 9 is used as the QCI value for direct communication between the base station and the terminal, 10 to 15 may be used for the relay communication. For example, the vehicle 112 associates QCI = 11 for the user data of the vehicle 111. For the communication of the self-device, the vehicle 112 associates a QCI value in accordance with a service content requested in the communication. Note that each value in a range available to the relay communication may be associated with information of the quality of service in the relay communication. That is, the identification information of the quality of service such as the QCI may indicate not only whether the associated user data is user data of the vehicle 112 or the user data of the relay communication of the vehicle 111 but also information of the quality of service of the relay communication of the vehicle 111.

Note that the vehicle 112 may acquire the value of the identification information of the quality of service used for the communication of the user data of the vehicle 111 from notification from the base station 101, for example. In one example, the base station 101 can notify the vehicle 112 of the range of QCI values available to the relay communication, by broadcasting or individual signaling. In addition, for example, the base station 101 may make a setting for the communication of the vehicle 111 through the vehicle 112 at the time of connection with the vehicle 112, and may notify the vehicle 112 of the value of the identification information of the quality of service that has to be used for the relay communication for the vehicle 111. When making the setting after identifying that the communication is the relay communication for the vehicle 111, the base station 101 is capable of identifying a value corresponding to the quality of service requested by the user data of the vehicle 111, and notifying the vehicle 112 of the value. Note that the base station 101 may notify beforehand the vehicle 112 of information indicating a correspondence relationship between the quality of service of the relay communication and the value that has to be used, and the vehicle 112 may select the value of the identification information of the quality of service to be associated with the user data of the relay communication, based on the information that has been notified. In addition, one value that has been optionally selected from a certain value range may be associated with the user data of the relay communication, regardless of the quality of service. In this case, only whether the user data is the user data of the relay communication is identified by the identification information of the quality of service. In this case, for example, in every communication device to be relayed through, a different value can be used for the identification information of the quality of service, even for communication of the same quality of service. Note that the vehicle 112 may acquire the value of the identification information of the quality of service used for the communication of the user data of the vehicle 111 from notification from the vehicle 111, for example. In one example, the vehicle 111 may notify the vehicle 112 of the value of the identification information corresponding to the quality of service requested by the self-device. In addition, the vehicle 111 may randomly select one value from the range of values of the identification information regarding the quality of service corresponding to the relay communication, and may notify the vehicle 112 of the selected value. Further, the vehicle 112 may randomly select one value from the range of values of the identification information regarding the quality of service corresponding to the relay communication, and may set the selected value to a value for the relay communication of the vehicle 111.

Note that the vehicle 112 may generate a signal obtained by associating terminal identification information in the cellular communication system of the vehicle 111 with the user data to be subject to the relay communication. Such terminal identification information is, for example, temporary mobile subscriber identity (TMSI) or globally unique temporary identifier (GUTI). On the other hand, since the vehicle 112 performs communication with the vehicle 111 in a communication method different from the cellular communication method, it is supposed that the vehicle 112 does not know the terminal identification information of the vehicle 111. Therefore, in the present embodiment, the vehicle 112 can acquire the terminal identification information of the vehicle 111 from the vehicle 111. This enables the relay communication to be performed by use of the terminal identification information in the cellular communication method of the vehicle 111, which connects to a communication method other than the cellular communication method, and consequently enables the network side such as the base station 101 to recognize the vehicle 111 as a communication partner device. Accordingly, in the cellular communication system, it becomes possible to charge the vehicle 111 the cost of the communication.

Note that the vehicle 112 can establish different data wireless bearers respectively for the user data of the self-device and the user data of the vehicle 111, and can transmit and receive the use data using the data wireless bearers. For example, in a case where the identification information regarding the quality of service is associated with the user data of the vehicle 111 in a format by which the quality of service is identifiable, the vehicle 112 can establish a data wireless bearer corresponding to the quality of service, and can relay the communication of the user data. On the other hand, for example, in a case where the quality of service for the user data of the vehicle 111 is not identified, the vehicle 112 may transmit and receive the user data of the relay communication by using the data wireless bearer that has been established for the user data transmitted by the self-device. Note that, even in a case where the quality of service of the user data of the vehicle 111 is identified, the vehicle 112 may transmit and receive the user data of the vehicle 111 by using the data wireless bearer for transmission and reception of the user data of the self-device.

Hereinafter, the configuration and operations of the vehicle 112, which performs such processing, will be described. Note that in the present embodiment, processing to be performed by the vehicle 112 is described, but the other vehicles (the vehicle 111, the vehicle 113 to the vehicle 114) can also perform similar processing. In addition, the "vehicle" is merely one aspect of the communication device, and the discussion according to the present embodiment is applicable to a wireless communication device in any aspect.

### (Device Configuration)

FIG. 2 illustrates a hardware configuration example of a communication device mounted on the vehicle 112 in the present embodiment. The communication device includes a general-purpose computer in one example, and the computer includes, for example, a CPU 201, a memory 202, a storage device 203, a communication circuit 204, and an input and output circuit 205. Note that FIG. 2 illustrates a configuration example of hardware according to the present embodiment, and illustrations of the other configurations are omitted. The CPU 201 is, for example, a central processing unit (CPU) that performs processing to be described later and that controls the entire device, by executing a program stored in the memory 202. Note that the CPU 201 can be substituted by any one or more processors such as a micro processing unit (MPU) or an application-specific integrated circuit (ASIC). The memory 202 holds a program for causing the communication device to perform various types of processing, and functions as a work memory at the time of executing the program. In one example, the memory 202 is a random access memory (RAM) or a read-only memory (ROM). The storage device 203 is, for example, a detachable external storage device, a built-in hard disk drive, or the like, and holds various types of information. The communication circuit 204 performs signal processing related to communication, acquires various types of information from an external device through a communication network, and transmits the various types of information to the external device. Note that the information that has been acquired by the communication circuit 204 can be stored in, for example, the memory 202 or the storage device 203. Note that the communication device can include a plurality of communication circuits 204. The input and output circuit 205 controls, for example, outputs of screen information to be displayed on a display device, not illustrated, audio information to be output from a speaker, and receiving of user inputs via a keyboard, a pointing device, or the like. Note that the input and output circuit 205 may control a device that integrally inputs into and outputs from a touch panel or the like. Note that the configuration of FIG. 2 is an example, and for example, the communication device may include dedicated hardware for performing the above-described processing.

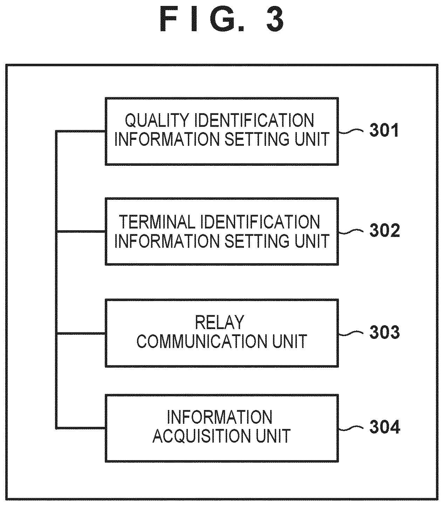

FIG. 3 illustrates a functional configuration example of a communication device provided in the vehicle 112. The communication device includes, a quality identification information setting unit 301, a terminal identification information setting unit 302, a relay communication unit 303, and an information acquisition unit 304 as its functions. Note that these functional units may be implemented, for example, by the CPU 201 executing a program stored in the memory 202 or the storage device 203, or may be implemented by dedicated hardware. Note that since the detailed operations of the respective functional units have been described above, only the functions are outlined here, and the detailed descriptions are omitted.

The quality identification information setting unit 301 sets the identification information regarding the quality of service as conventionally, for communication with the base station of the communication device itself. In addition, when relaying the communication between another communication device and a base station, the quality identification information setting unit 301 sets a value that is not used in the communication of the self-device to be identification information regarding the quality of service of the relay communication. The quality identification information setting unit 301 conducts control so that a signal in which each setting value is associated with corresponding user data is generated. When performing the relay communication for another communication device, the terminal identification information setting unit 302 sets terminal identification information of such another communication device for user data to be subject to the relay communication. For example, the terminal identification information setting unit 302 conducts control so that a signal in which each setting value is associated with corresponding user data is generated. The relay communication unit 303 performs communication with the base station including the relay communication. For example, the relay communication unit 303 newly establishes a data wireless bearer for transmission and reception of the user data of another communication device, or applies a wireless bearer for transmission and reception of the user data of the self-device, and transmits and receives the user data. In addition, the relay communication unit 303 performs communication with another communication device in a communication method different from the communication method for communicating with the base station. The information acquisition unit 304 acquires various types of information necessary for the relay communication. The quality identification information setting unit 301 acquires information of a range of values of the identification information regarding the quality of service available to the relay communication and the terminal identification information of another communication device from the base station or another communication device. In addition, the information acquisition unit 304 may acquire information by reading the information from a storage device in the self-device as necessary.

### (Flow of Processing)

Next, an example of a flow of processing performed by the above-described communication system will be described. Here, an example of a case where the vehicle 112 relays communication of the vehicle 111 will be described. Note that in the following processing example, a description will be given with regard to an example of a case where QCI (identification information regarding the quality of service) and TMSI (terminal identification information), which have to be used, of the vehicle 111 are notified from the vehicle 111 to the vehicle 112. However, this is an example, and these pieces of information may be notified from the base station 101, or for example, the vehicle 112 may determine the QCI that has to be used. Further, 5QI or another type of identification information may be used instead of QCI, and GUTI or another type of identification information may be used instead of TMSI. Note that details of each process to be described later have been described above. Therefore, in the description here, only the flow of the processing is outlined, and the detailed description is not repeated. The present processing is implemented by, for example, the CPU 201 executing a program stored in the memory 202 or the storage device 203.

First, before the vehicle 112 relays the communication of the vehicle 111, the vehicle 111 notifies the vehicle 112 of the QCI and the TMSI that have to be used in the relay communication (S501). This notification can be given, for example, when the vehicle 111 establishes a wireless connection with the vehicle 112 in another communication method different from the cellular communication method, and transmits and receives setting information for the relay communication using such a wireless connection. However, this is an example, and this notification may be given, for example, in the communication for the setting at the time of establishing the connection. In addition, as described above, the QCI value or the like may be notified from the base station 101 to the vehicle 112, or may be held by the vehicle 112 beforehand. Further, for example, in a case where the vehicle 112 relays data transmitted from the vehicle 111 without processing, the vehicle 111 can be configured to generate and transmit data for cellular communication in which the TMSI value and the QCI value are set. In this case, the vehicle 112 does not have to acquire the QCI value or the TMSI value at this timing.

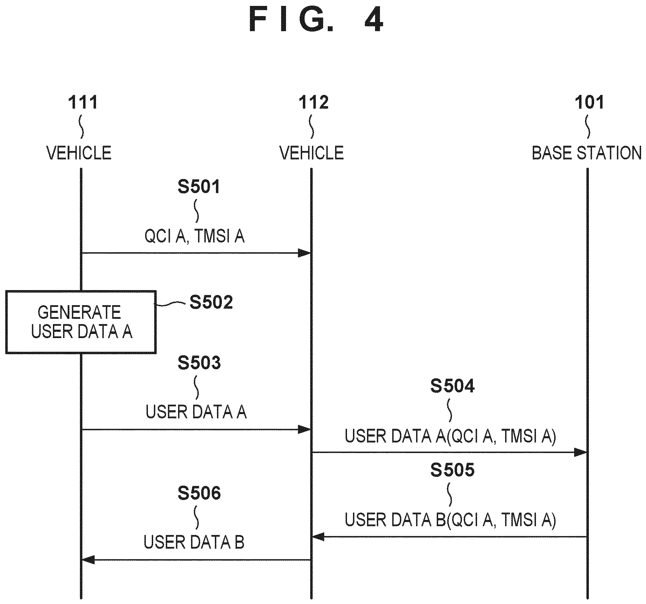

Thereafter, it is assumed that user data is generated in the vehicle 111 (S502). The vehicle 111 transmits the user data to the vehicle 112 (S503). The vehicle 112 transfers the user data to the base station 101, by using the QCI for relay communication and the TMSI of the vehicle 111 that have been acquired beforehand. Note that although not illustrated in FIG. 4, when the vehicle 112 transmits the user data of the self-device, the vehicle 112 can transmit the user data to be relayed by using the data wireless bearer same with the user data or separately establishing a data wireless bearer. Note that the vehicle 111 may form, for example, a frame including the user data in a frame format of the cellular communication method, may generate a packet including the frame as a payload and simply attached with a header of the communication method between the vehicle 111 and the vehicle 112, and may transmit the packet to the vehicle 112. In this case, the vehicle 112 can remove the header, can obtain a frame for the cellular communication, and can transfer the frame to the base station 101 without change.

In addition, the vehicle 112 can receive the user data from the base station 101 (S505). For example, the vehicle 112 is capable of identifying the corresponding QCI value from on which data wireless bearer the user data has been received, and is capable of identifying whether the user data is addressed to the self-device or the vehicle 111. Further, the vehicle 112 is also capable of identifying whether the user data is addressed to the self-device or the vehicle 111, based on the TMSI value associated with the user data. Then, in a case where the user data is addressed to the vehicle 111, the vehicle 112 transfers the user data to the vehicle 111.

As described above, in the present embodiment, it becomes possible to identify whether the data, which has been transmitted by the communication device that enables the relay communication, relates to the relay communication, based on at least the identification information regarding the quality of service. This enables the network side to identify whether the data is originated from the communication device or another communication device, and for example, enables charging of the cost appropriately.

## Claims

1. A communication device that is connected, as a terminal device, to a base station (101) of a cellular communication system and that relays communication between the base station (101) and another terminal device of the cellular communication system, wherein the communication device comprises:
setting means configured to set, as service quality identification information, a first value from a first range of numbers for user data generated in the communication device, and a second value from a second range of numbers that does not overlap the first range and for user data received from the other terminal device; and
transmission means configured to transmit the user data generated in the communication device with the service quality identification information in which the first value is set, and transmit the user data received from the other terminal device with the service quality identification information in which the second value is set.

2. The communication device according to claim 1, further comprising acquisition means configured to acquire terminal identification information from the other terminal device, the other terminal device being identifiable by the terminal identification information in the cellular communication system, wherein
the transmission means is configured to transmit the user data from the other terminal device with the service quality identification information and the terminal identification information.

3. The communication device according to claim 2, wherein the terminal identification information is either a temporary mobile subscriber identity (TMSI) or a globally unique temporary identifier (GUTI).

4. The communication device according to any one of claims 1 to 3, wherein the transmission means is configured to transmit the user data received from the other terminal device with the service quality identification information in which the second value is set on a wireless bearer on which the user data generated in the communication device with the service quality identification information in which the first value is set is transmitted.

5. The communication device according to any one of claims 1 to 4, wherein communication with the other terminal device is performed by using a non-cellular communication method.

6. The communication device according to any one of claims 1 to 5, wherein the service quality identification information is represented by a value of either a quality of service (QoS) class identifier (QCI) or a 5G QoS Identifier (5QI).

7. The communication device according to claim 1, further comprising acquisition means configured to acquire, from the other terminal device, a value of the service quality identification information to be set when the transmission means transmits the user data received from the other terminal device.

8. The communication device according to claim 1, further comprising acquisition means configured to acquire, from the base station (101), a value of the service quality identification information to be set when the transmission means transmits the user data received from the other terminal device.

9. A communication method performed by a communication device that is connected, as a terminal device, to a base station (101) of a cellular communication system and that relays communication between the base station (101) and another terminal device of the cellular communication system, the communication method comprising:
setting, as service quality identification information, a first value from a first range of numbers for user data generated in the communication device, and a second value from a second range of numbers that does not overlap the first range and for user data received from the other terminal device; and
transmitting the user data generated in the communication device with the service quality identification information in which the first value is set, and transmitting the user data received from the other terminal device with the service quality identification information in which the second value is set.

10. A non-transitory computer-readable storage medium storing a program for causing a computer included in a communication device that is connected, as a terminal device, to a base station (101) of a cellular communication system and that relays communication between the base station (101) and another terminal device of the cellular communication system to:
set, as service quality identification information, a first value from a first range of numbers for user data generated in the communication device, and a second value from a second range of numbers that does not overlap the first range and for user data received from the other terminal device; and
transmit the user data generated in the communication device with the service quality identification information in which the first value is set, and transmit the user data received from the other terminal device with the service quality identification information in which the second value is set.

## Patentansprüche

1. Kommunikationsvorrichtung, welche, als eine Endgerätvorrichtung, mit einer Basisstation (101) eines Funkkommunikationssystems verbunden ist und welche eine Kommunikation zwischen der Basisstation (101) und einer anderen Endgerätvorrichtung des Funkkommunikationssystems weiterleitet, wobei die Kommunikationsvorrichtung umfasst:
ein Festsetzungsmittel, welches dazu eingerichtet ist, als Servicequalitätsidentifikationsinformationen, einen ersten Wert aus einem ersten Bereich von Zahlen für Nutzerdaten, welche in der Kommunikationsvorrichtung erzeugt sind, und einen zweiten Wert aus einem den ersten Bereich nicht überlappenden zweiten Bereich von Zahlen für Nutzerdaten festzusetzen, welche von der anderen Endgerätvorrichtung erhalten sind; und
ein Übertragungsmittel, welches dazu eingerichtet ist, die Nutzerdaten, welche in der Kommunikationsvorrichtung erzeugt sind, mit den Servicequalitätsidentifikationsinformationen zu übertragen, in welchen der erste Wert festgesetzt ist, und die Nutzerdaten, welche von der anderen Endgerätvorrichtung erhalten sind, mit den Servicequalitätsidentifikationsinformationen zu übertragen, in welchen der zweite Wert festgesetzt ist.

2. Kommunikationsvorrichtung nach Anspruch 1, ferner umfassend ein Akquirierungsmittel, welches dazu eingerichtet ist, Endgerätidentifikationsinformationen von der anderen Endgerätvorrichtung zu akquirieren, wobei die andere Endgerätvorrichtung durch die Endgerätidentifikationsinformationen in dem Funkkommunikationssystem identifizierbar ist, wobei
das Übertragungsmittel dazu eingerichtet ist, die Nutzerdaten von der anderen Endgerätvorrichtung mit den Servicequalitätsidentifikationsinformationen und den Endgerätidentifikationsinformationen zu übertragen.

3. Kommunikationsvorrichtung nach Anspruch 2, wobei die
Endgerätidentifikationsinformationen entweder eine Temporary Mobile Subscriber Identity (TMSI) oder eine Globally Unique Temporary Identifier (GUTI) sind.

4. Kommunikationsvorrichtung nach einem der Ansprüche 1 bis 3, wobei das Übertragungsmittel dazu eingerichtet ist, die Nutzerdaten, welche von der anderen Endgerätvorrichtung erhalten sind, mit den Servicequalitätsidentifikationsinformationen, in welchen der zweite Wert festgesetzt ist, auf einem drahtlosen Träger zu übertragen, auf welchem die Nutzerdaten, welche in der Kommunikationsvorrichtung erzeugt sind, mit den Servicequalitätsidentifikationsinformationen übertragen sind, in welchen der erste Wert festgesetzt ist.

5. Kommunikationsvorrichtung nach einem der Ansprüche 1 bis 4, wobei die Kommunikation mit der anderen Endgerätvorrichtung unter Verwendung eines Nicht-Funkkommunikationsverfahrens durchgeführt ist.

6. Kommunikationsvorrichtung nach einem der Ansprüche 1 bis 5, wobei die Servicequalitätsidentifikationsinformationen durch einen Wert von entweder einem Quality of Service (QoS) Class Identifier (QCI) oder einem 5G QoS Identifier (501) präsentiert sind.

7. Kommunikationsvorrichtung nach Anspruch 1, ferner umfassend ein Akquirierungsmittel, welches dazu eingerichtet ist, einen Wert der Servicequalitätsidentifikationsinformationen, welche festzusetzen sind, wenn das Übertragungsmittel die Nutzerdaten überträgt, welche von der anderen Endgerätvorrichtung erhalten sind, von der anderen Endgerätvorrichtung zu akquirieren.

8. Kommunikationsvorrichtung nach Anspruch 1, ferner umfassend ein Akquirierungsmittel, welches dazu eingerichtet ist, einen Wert der Servicequalitätsidentifikationsinformationen, welche festzusetzen sind, wenn das Übertragungsmittel die Nutzerdaten überträgt, welche von der anderen Endgerätvorrichtung erhalten sind, von der Basisstation (101) zu akquirieren.

9. Kommunikationsverfahren, welches durch eine Kommunikationsvorrichtung durchgeführt wird, welche, als eine Endgerätvorrichtung, mit einer Basisstation (101) eines Funkkommunikationssystems verbunden ist und welche eine Kommunikation zwischen der Basisstation (101) und einer anderen Endgerätvorrichtung des Funkkommunikationssystems weiterleitet, wobei das Kommunikationsverfahren umfasst:
Festsetzen, als Servicequalitätsidentifikationsinformationen, eines ersten Wertes aus einem ersten Bereich von Zahlen für Nutzerdaten, welche in der Kommunikationsvorrichtung erzeugt werden, und eines zweiten Wertes aus einem den ersten Bereich nicht überlappenden zweiten Bereich von Zahlen für Nutzerdaten, welche von der anderen Endgerätvorrichtung erhalten werden; und
Übertragen der Nutzerdaten, welche in der Kommunikationsvorrichtung erzeugt werden, mit den Servicequalitätsidentifikationsinformationen, in welchen der erste Wert festgesetzt wird, und Übertragen der Nutzerdaten, welche von der anderen Endgerätvorrichtung erhalten werden, mit den Servicequalitätsidentifikationsinformationen, in welchen der zweite Wert festgesetzt wird.

10. Nichtflüchtiges computerlesbares Speichermedium, welches ein Programm zum Veranlassen eines Computers speichert, welcher in einer Kommunikationsvorrichtung umfasst ist, welche, als eine Endgerätvorrichtung, mit einer Basisstation (101) eines Funkkommunikationssystems verbunden ist und welche eine Kommunikation zwischen der Basisstation (101) und einer anderen Endgerätvorrichtung des Funkkommunikationssystems weiterleitet, zum:
Festsetzen, als Servicequalitätsidentifikationsinformationen, eines ersten Wertes aus einem ersten Bereich von Zahlen für Nutzerdaten, welche in der Kommunikationsvorrichtung erzeugt werden, und eines zweiten Wertes aus einem den ersten Bereich nicht überlappenden zweiten Bereich von Zahlen für Nutzerdaten, welche von der anderen Endgerätvorrichtung erhalten werden; und
Übertragen der Nutzerdaten, welche in der Kommunikationsvorrichtung erzeugt werden, mit den Servicequalitätsidentifikationsinformationen, in welchen der erste Wert festgesetzt wird, und Übertragen der Nutzerdaten, welche von der anderen Endgerätvorrichtung erhalten werden, mit den
Servicequalitätsidentifikationsinformationen, in welchen der zweite Wert festgesetzt wird.

## Revendications

1. Dispositif de communication qui est connecté, en tant que dispositif terminal, à une station de base (101) d'un système de communication cellulaire et qui relaie une communication entre la station de base (101) et un autre dispositif terminal du système de communication cellulaire, dans lequel le dispositif de communication comprend :
des moyens de réglage configurés pour définir, en tant qu'informations d'identification de qualité de service, une première valeur à partir d'une première plage de numéros pour des données d'utilisateur générées dans le dispositif de communication, et une seconde valeur à partir d'une seconde plage de numéros qui ne chevauche pas la première plage et pour des données d'utilisateur reçues en provenance de l'autre dispositif terminal ; et
des moyens de transmission configurés pour transmettre les données d'utilisateur générées dans le dispositif de communication avec les informations d'identification de qualité de service dans lesquelles la première valeur est définie, et transmettre les données d'utilisateur reçues en provenance de l'autre dispositif terminal avec les informations d'identification de qualité de service dans lesquelles la seconde valeur est définie.

2. Dispositif de communication selon la revendication 1, comprenant en outre des moyens d'acquisition configurés pour acquérir des informations d'identification de terminal à partir de l'autre dispositif terminal, l'autre dispositif terminal étant identifiable par les informations d'identification de terminal dans le système de communication cellulaire, dans lequel
le moyen de transmission est configuré pour transmettre les données d'utilisateur de l'autre dispositif terminal avec les informations d'identification de qualité de service et les informations d'identification de terminal.

3. Dispositif de communication selon la revendication 2, dans lequel les informations d'identification de terminal sont soit une identité temporaire d'abonné mobile (TMSI), soit un identifiant temporaire global unique (GUTI).

4. Dispositif de communication selon l'une quelconque des revendications 1 à 3, dans lequel les moyens de transmission sont configurés pour transmettre les données d'utilisateur reçues en provenance de l'autre dispositif terminal avec les informations d'identification de qualité de service dans lesquelles la seconde valeur est définie sur un support sans fil sur lequel sont transmises les données d'utilisateur générées dans le dispositif de communication avec les informations d'identification de qualité de service dans lesquelles la première valeur est définie.

5. Dispositif de communication selon l'une quelconque des revendications 1 à 4, dans lequel une communication avec l'autre dispositif terminal est effectuée en utilisant un procédé de communication non cellulaire.

6. Dispositif de communication selon l'une quelconque des revendications 1 à 5, dans lequel les informations d'identification de qualité de service sont représentées par une valeur d'un identifiant de classe (QCI) de qualité de service (QoS) ou d'un identifiant QoS 5G (5QI).

7. Dispositif de communication selon la revendication 1, comprenant en outre des moyens d'acquisition configurés pour acquérir, à partir de l'autre dispositif terminal, une valeur des informations d'identification de qualité de service à définir lorsque les moyens de transmission transmettent les données d'utilisateur reçues en provenance de l'autre dispositif terminal.

8. Dispositif de communication selon la revendication 1, comprenant en outre des moyens d'acquisition configurés pour acquérir, à partir de la station de base (101), une valeur des informations d'identification de qualité de service à définir lorsque les moyens de transmission transmettent les données d'utilisateur reçues en provenance de l'autre dispositif terminal.

9. Procédé de communication réalisé par un dispositif de communication qui est connecté, en tant que dispositif terminal, à une station de base (101) d'un système de communication cellulaire et qui relaie la communication entre la station de base (101) et un autre dispositif terminal du système de communication cellulaire, le procédé de communication comprenant :
la définition, en tant qu'informations d'identification de qualité de service, d'une première valeur à partir d'une première plage de numéros pour des données d'utilisateur générées dans le dispositif de communication, et d'une seconde valeur à partir d'une seconde plage de numéros qui ne chevauche pas la première plage et pour des données d'utilisateur reçues en provenance de l'autre dispositif terminal ; et
la transmission des données d'utilisateur générées dans le dispositif de communication avec les informations d'identification de qualité de service dans lesquelles la première valeur est définie, et la transmission des données d'utilisateur reçues en provenance de l'autre dispositif terminal avec les informations d'identification de qualité de service dans lesquelles la seconde valeur est définie.

10. Support de stockage non transitoire lisible par ordinateur stockant un programme pour amener un ordinateur compris dans un dispositif de communication qui est connecté, en tant que dispositif terminal, à une station de base (101) d'un système de communication cellulaire et qui relaie une communication entre la station de base (101) et un autre dispositif terminal du système de communication cellulaire à :
définir, en tant qu'informations d'identification de qualité de service, une première valeur à partir d'une première plage de numéros pour des données d'utilisateur générées dans le dispositif de communication, et une seconde valeur à partir d'une seconde plage de numéros qui ne chevauche pas la première plage et pour les données d'utilisateur reçues en provenance de l'autre dispositif terminal ; et
transmettre les données d'utilisateur générées dans le dispositif de communication avec les informations d'identification de qualité de service dans lesquelles la première valeur est définie, et transmettre les données d'utilisateur reçues en provenance de l'autre dispositif terminal avec les informations d'identification de qualité de service dans lesquelles la seconde valeur est définie.
